# EUROPÄISCHE PATENTSCHRIFT

(11) **EP 0 583 595 B1**
(45) Veröffentlichungstag und Bekanntmachung des Hinweises auf die Patenterteilung: **22.05.1996**
(21) Anmeldenummer: 93110863.3
(22) Anmeldetag: 07.07.1993
(51) Int. Cl.: C08L 77/00, C08J 11/04, B29B 17/00

(54) **Schlagzähe, gegebenenfalls gefüllte Polyamidmischungen mit Polyamid/Polyethylen-Verbundfolienabfällen**
Impact resistant, optionally filled polyamide mixtures with polyamide-polyethylene laminated film wastes
Compositions de polyamide résistantes aux chocs, éventuellement chargées avec des résidus de film laminé polyamide-polyéthylène

(30) Priorität: 20.07.1992 DE 4223864; 02.04.1993 DE 4310850
(43) Veröffentlichungstag der Anmeldung: 23.02.1994
(73) Patentinhaber: BAYER AG, 51368 Leverkusen (DE)
(72) Erfinder: Timmermann, Ralf, Dr., D-47800 Krefeld (DE); Dujardin, Ralf, Dr., D-47877 Willich (DE); Orth, Peter, Dr., D-50733 Köln (DE); Ostlinning, Edgar, Dr., D-40237 Düsseldorf (DE); Schulte, Helmut, Dipl.-Ing., D-47803 Krefeld (DE); Dhein, Rolf, Dr., D-47800 Krefeld (DE); Grigat, Ernst Dr., D-51371 Leverkusen (DE)

(56) Entgegenhaltungen:
- DE-A- 3 938 552
- PATENT ABSTRACTS OF JAPAN vol. 009, no. 261 (M-422)18. Oktober 1985 & JP-A-60 109 806 (SEKISUI KAGAKU KOGYO) 15. Juni 1985
- PATENT ABSTRACTS OF JAPAN vol. 009, no. 261 (M-422)18. Oktober 1985 & JP-A-60 109 806

## Beschreibung

Die Erfindung betrifft schlagzähe, gegebenenfalls gefüllte Polyamidmischungen, die Polyamid/Polyethylen-Verbundfolienabfälle enthalten.

Polyamid (PA) hat als Sperrschichtmaterial in Mehrschicht- bzw. Verbundfolien, meistens in Kombinationen mit Polyolefinen speziell Polyethylen niederer Dichte (PE-LD), zur Verpackung von verderblichen Lebensmitteln eine seit Jahren wachsende Bedeutung erreicht. Die Kombination der verschiedenen Schichten reicht von üblicherweise 2 bis 10 Schichten in je nach Anforderung verschiedenen Dicken auch in Verwendung mit anderen Barrieremitteln wie Ethylen-Vinylalkohol-Copolymere (EVOH) oder Polyvinylidenchlorid (PVDC). Zwischen den verschiedenen Polyolefin und Polyamidschichten werden üblicherweise Haftvermittler eingesetzt. Die in den Verbundfolien verwendeten Polyamide sind in der Regel reine PA 6-Typen bzw. Copolyamide mit gegenüber PA 6 abgesenkter Schmelztemperatur.

Diese Folien unterschiedlichster Zusammensetzung sind Stand der Technik und dem Fachmann wohlbekannt (s. Kunststoffe 1989, Heft 9, S. 818 bis 822, Carl Hanser Verlag, München).

Bei der Herstellung der Folien fällt in der Regel zwischen 10 und 15 % Abfall (z.B. Folienrandbeschnitt) an (des weiteren PA/PE-Abfälle genannt). Diese Verbundfolienabfälle können so nicht direkt wieder in die Folien eingesetzt werden.

Eine wirtschaftliche Trennung der Folien in die Einzelkomponenten ist ebenfalls nicht möglich.

Zur Abfallvermeidung ist es notwendig, diese sehr gemischten Folienabfälle mit einem stark schwankenden Polyamidgehalt einer sinnvollen Wiederverwertung zuzuführen.

Aufgrund des hohen Bedarfs an schlagzähen, gegebenenfalls gefüllten bzw. verstärkten Typen ist es besonders interessant, eine Verwendung der Folienabfälle in diesem Einsatzbereich zu suchen. Eine marktfähige technische Lösung dafür mit guten mechanischen und anderen Eigenschaften ist noch nicht bekannt und auch nicht aus der Literatur ableitbar.

In der DE-A 3 938 552 werden Vernetzungsmechanismen zur Kompatibilisierung des Polyethylen- und des Polyamidanteils beschrieben. Reste von PA/PE-Verbundfolien werden mit Hilfe von Peroxiden und weiteren Hilfsmitteln wie z.B. Butindiol im Extruder vernetzt. Mechanische Eigenschaften werden nicht angegeben. Lediglich eine weitere Verdünnung des Polyethylen-Polyamid-Gemisches mit Polypropylen zur Einstellung von mechanischen Eigenschaften und der Schmelzeviskosität ist erwähnt. Dies betrifft also hoch polyolefinhaltige Mischungen. Die Verwendung von Füll- und Verstärkungsstoffen wird nicht erwähnt.

In einer Firmenschrift (E. Jottier, Polymers & the Environment: "Recycling PE/PA Multilayer Structures Using Compatibilisers", Exxon Chemical 9/1991) wird die Mischung von PA/PE-Abfällen mit Kompatibilisatoren, gegebenenfalls auch unter Hinzunahme weiteren Polyethylens, beschrieben. Die Zugabe von Polyamid beispielsweise zur Eigenschaftsverbesserung wird nicht erwähnt. Die Zugabe von Füll- und Verstärkungsstoffen sowie anderen Additiven außer dem Kompatibilisator wird nicht erwähnt. Als Verwendung des Compounds wird ausschließlich der klassische Einsatzbereich von Polyethylen empfohlen. Eine Verwendung des Compounds in klassischem Polyamid-Einsatzbereich wird weder empfohlen noch in irgend einer Weise nahegelegt und ist aus den genannten Versuchen auch nicht abzuleiten. Die in der o.a. Literaturstelle beschriebenen Rezepturen ergeben auch keine dafür geeigneten Materialien.

Polyamid-Polyolefin-Blends, speziell Polyamid-Polyethylen-Blends, sind dem Fachmann seit Jahren bekannt.

Die Legierungen zeichnen sich dadurch aus, daß Polyamid mit 5 bis 40 Gew.-% Polyethylen unter Zuhilfenahme eines Verfahrens zur Verträglichkeitsmachung (Peroxide, Blockcopolymere, Verträglichkeitsvermittler) gemischt wird. Diese Blends zeichnen sich durch erhöhte Schlagzähigkeit und verringerte Wasseraufnahme aus.

Ebenso bekannt ist die Herstellung von hochschlagzähen Polyamiden durch Compoundierung von Polyamid ausschließlich mit modifizierten Polyolefinen speziell säure- bzw. anhydrid-funktionellen Polyethylenen.

Die Herstellung solcher Polyamid-Blends ist z.B. beschrieben in: Kunststoffe 65 (1975) S. 139ff, Kunststoffe 80 (1991) S. 838ff, EP 0 469 693 und darin zitierte Literatur [z.B. EP-A 0 235 876, EP-A 0 245 964, EP-A 0 270 247, EP-A 0 272 695, EP 0 335 649], WO 8 908 120, JP 012 845 552, WO 9 107 467, US 3 484 403.

In jedem Fall ist ein sorgfältiges Austarieren der Einzelkomponenten notwendig, um optimale Eigenschaften zu erhalten.

Es wurde nun gefunden, daß Formmassen mit PA/PE-Abfällen sowie gegebenenfalls erheblichen Mengen an Füll- und/oder Verstärkungsstoffen unter Erhalt einer beträchtlichen Steifigkeit, ausgedrückt durch ein Zug-E-Modul von mindestens 1 000 N/mm (gemessen nach DIN 53 457-t am Zugstab Nr. 3; 4 mm dick), eine vorzügliche Schlagzähigkeit aufweisen, dadurch ausgedrückt, daß die Prüfstäbe (80x10x4 mm) im Schlagversuch (IZOD; ausgeführt nach ISO 180/1C bei Raumtemperatur = 23°C) nicht brechen (= Prüfergebnis "nicht gebrochen") bzw. bei ungefüllten Formmassen die Kerbschlagzähigkeit, gemessen nach ISO 180/1A von schlagzähem Polyamid aus neuen Materialien erreicht.

Gegenstand der Erfindung sind somit Blends, die sich zusammensetzen aus
A) 10 bis 90 Gew.-%, vorzugsweise 15 bis 50 Gew.-%, Polyamid mit einer relativen Viskosität (gemessen in einer 1-masseprozentigen Lösung in m-Kresol bei 25°C) ηᵣₑₗ = 2,0 bis ηᵣₑₗ = 5,0, bevorzugt ηᵣₑₗ = 2,5 bis ηᵣₑₗ = 3,5
B) 1 bis 50 Gew.-%, vorzugsweise 15 bis 40 Gew.-%, PA/PE-Verbundfolienabfällen verschiedenster Zusammensetzung, bevorzugt mit einem Gehalt an 30 bis 100 Gew.-% Polyethylenen, besonders bevorzugt mit einem Gehalt an 60 bis 90 Gew.-% Polyethylenen
C) 1 bis 15 Gew.-%, vorzugsweise 2 bis 10 Gew.-%, Verträglichkeitsvermittler sowie
D) 0 bis 60 Gew.-%, vorzugsweise 20 bis 45 Gew.-%, besonders bevorzugt 30 bis 40 Gew.-%, an anorganischen Füll- und/oder Verstärkungsstoffen,
E) 0 bis 30 Gew.-%, vorzugsweise 0 bis 15 Gew.-%, besonders bevorzugt 5 bis 10 Gew.-% Kautschuke, insbesondere gepfropfte Kautschuke bzw. kautschukartige Polymere, bevorzugt auf Polydien-, Polyacrylat- und Polyolefinbasis
F) 0 bis 10 Gew.-%, vorzugsweise 0 bis 5 Gew.-%, übliche Verarbeitungshilfsmittel oder andere Additive wie beispielsweise UV-Stabilisatoren, Antioxidantien, Additive zur Reduzierung der Wasseraufnahme, Pigmente, Farbstoffe, Nukleierungsmittel, Kristallisationsbeschleuniger bzw. -verzögerer, Fließhilfsmittel, Gleitmittel, Entformungsmittel oder Flammschutzmittel,
wobei sich die Prozentangaben auf die Summe der Komponenten A) bis F) beziehen.

Geeignete Polyamide im Sinne der vorliegenden Erfindung sowohl für die Polyolefin/Polyamid-Verbundfolien als auch für die Zugabe von Polyamid, welches erstmals verarbeitet wird, sind alle aliphatischen oder cycloaliphatischen Polyamide sowie alle aliphatisch/cycloaliphatisch, aliphatisch/aromatischen und cycloaliphatischen/aromatischen Polyamide oder Copolyamide. Solche Polyamide sind z.B. Polyamide, die aus Aminocarbonsäuren mit 4 bis 12 Kohlenstoffatomen, z.B. ε-Caprolactam, ω-Aminoundecansäure, ω-Aminododecansäure oder entsprechende Lactame nach üblichen Verfahren der Polykondensation oder Polymerisation hergestellt werden. Ferner kommen solche Polyamide in Betracht, die durch Polykondensation aliphatischer oder cycloaliphatischer Diamine mit aliphatischen, cycloaliphatischen oder aromatischen Dicarbonsäuren erhalten werden.

Derartige Diamine sind beispielsweise Ethylendiamin, Tetramethylendiamin, Hexamethylendiamin, Dekamethylendiamin, Dodecanmethylendiamin, 2,2,4-Trimethyl-hexamethylendiamin, 1,4-Diaminomethyl-cyclohexan, 4,4'-Diaminodicyclohexylmethan, 3,3'-Dimethyl-4,4'-Diamino-dicyclohexylmethan und Isophorondiamin.

Beispiele für Dicarbonsäuren sind z.B. Oxalsäure, Adipinsäure, Azelainsäure, Decandicarbonsäure, Hexandicarbonsäure, 2,4,4- und 2,2,4-Trimethyladipinsäure, Isophthalsäure und Terephthalsäure.

Copolyamide im Sinne der vorliegenden Erfindung sind solche Polyamide, die durch Copolymerisation oder durch Copolykondensation mehrerer der vorstehend genannten Aminocarbonsäuren, deren Lactamen, Diaminen und Dicarbonsäuren hergestellt werden können. Polyamid-6, Polyamid-66 und deren Copolyamide sind bevorzugt. Polyamid 6 und Copolyamide aus Polyamid 6 und Polyamid 66 mit mindestens 70 Gew.-% Polycaprolactam sind besonders bevorzugt.

Die eingesetzten PA/PE-Abfälle B) entsprechen den völlig verschieden zusammengesetzten Verbundfolien. Diese Verbundfolien und deren mannigfaltige Zusammensetzung sind dem Fachmann bekannt. In ihnen liegt der Anteil an Polyamid normalerweise etwa zwischen 15 und 50 %. Der in diesen Verbundfolien eingesetzte Haftvermittler wird üblicherweise in Konzentrationen von wenigen Prozent zwischen den verschiedenen PA/PE-Schichten eingebracht und besteht z.B. aus Ethylen-Acrylsäure-Copolymeren, die teilweise oder vollständig als Salz der Carbonsäure vorliegen. Solche Substanzen sind dem Fachmann wohlbekannt z.B. unter dem Namen Surlyn® von der Fa. Du Pont. Aber auch andere Haftvermittler sind denkbar und werden verwendet.

Die Zusammensetzung der PA/PE-Folien ist für die Herstellung der schlagzähen Polyamide nicht beschränkt, d.h. jegliche Form von PA/PE-Abfällen kann bei den Versuchen verwendet werden. Dies ist als großer Vorteil zu sehen und ist völlig überraschend. Zur leichteren Weiterverarbeitung der Folienabfälle sollten sie vorkompaktiert sein, dies ist allerdings keine notwendige Voraussetzung.

Geeignete Polyolefine sind Polyethylene unterschiedlicher Herstellung wie z.B. LLDPE, LDPE, HDPE und Polypropylen. Bevorzugt sind die vor allem bei Verbundfolien benutzten LDPE-Typen.

Die eingesetzten Verträglichkeitsvermittler in den erfindungsgemäßen Blends sind Polyethylene verschiedenen Molekulargewichts, die entweder durch Pfropfung von Polyethylen oder durch Copolymerisation von Ethylen mit anderen reaktiven Monomeren mit gegenüber PA reaktiven Gruppen ausgerüstet werden (Anhydrid-, Amino-, Säure-, Epoxid-, Ester-, Ketogruppen und Salze von Carbonsäuren).

Vorzugsweise werden Ethylen-Acrylsäure-Acrylsäure-(t-Alkyl)-ester, Ethylen-Glycidylacrylat (oder Allylglycidether)-Acrylsäure-(t-Alkyl)-ester, Ethylen-Acrylsäure(ester)-Maleinsäureanhydrid oder Ethylen-Maleinsäureanhydrid-Copolymere verwendet.

Die in der vorliegenden Erfindung verwendeten Verträglichkeitsvermittler C) sind beispielsweise wie folgt aufgebaut aus:
1. 40 bis 100 Gew.-% mindestens eines α-Olefins mit 2 bis 8 C-Atomen,
2. 0 bis 50 Gew.-% eines Diens,
3. 0 bis 45 Gew.-% eines primären oder sekundären C₁-C₁₂-Alkylesters der Acrylsäure oder Methacrylsäure oder Mischungen derartiger Ester,
4. 0 bis 45 Gew.-% einer olefinisch ungesättigten Mono- oder Dicarbonsäure, die auch teilweise oder vollständig als Salz vorliegen kann und/oder einem funktionellen Derivat einer solchen Säure und
5. 0 bis 40 Gew.-% eines Epoxygruppen enthaltenden Monomeren.

Prinzipiell sind auch andere, für Polyamid- bzw. Polyolefinblends verwendbare Materialien als Verträglichkeitsvermittler denkbar.

Als Füll- und/oder Verstärkungsstoffe D) dienen beispielsweise Mineralien wie beispielsweise Talkum, Kreide, Kaolin, Nephelinsyenit, bevorzugt mit einer für Polyamide üblichen Schlichte benetzt, sowie faserförmige Materialien wie Glas- oder Kohlefasern oder Gemische aus diesen Substanzgruppen.

Die kautschukartigen Polymeren E) sollten, wenn nötig, gegebenenfalls zumindestens teilweise, chemisch so modifiziert sein, daß eine partielle Ankopplung der Phasen erfolgen kann. Möglichkeiten hierzu sind grundsätzlich bekannt, z.B. sind Carbonsäure- oder Carbonsäureanhydridgruppen, Carbonsäure-(t-alkyl)ester, Aminogruppen oder Epoxidgruppen in die Kautschuke, vorzugsweise in den Mantel (shell) aus gepfropften Monomeren, eingebaut.

Überraschenderweise zeigen diese Blends Eigenschaften, die auch erstmals verarbeitete Materialien aufweisen. Normalerweise zeigen Blends, in denen mehrkomponentige Abfälle verwendet werden, eine Reduzierung in den Eigenschaften. Die weitere Nutzung dieser Teile findet in minderwertigen Anwendungen statt (sog. down-recycling). Dies ist mit den vorliegenden Materialien nicht notwendig.

Die Herstellung erfolgt durch einfaches Mischen der Komponenten mit anschließender Verarbeitung auf einem Extruder. Man kann auch vorher Konzentrate der PA/PE-Folienabfälle bzw. des PA mit dem Verträglichkeitsvermittler in allen Mischungsbereichen herstellen und dann weiter verarbeiten.

Zusätzlich können weitere gewünschte Additive eincompoundiert werden.

Gegenstand der Erfindung ist auch die Verwendung der erfindungsgemäßen Mischungen zur Herstellung geformter Körper sowie die Verwendung der geformten Körper.

### Beispiele

Die nachfolgenden Beispiele wurden mit einem heterogenen Polyamid/Polyethylen-Verbundfolienabfall mit durchschnittlich 20 Gew.-% Anteil Polyamid, im folgenden nur PA/PE genannt, durchgeführt.

Die Lösungsviskositäten wurden als 1 gew.-%ige Lösungen in m-Kresol bei 25°C bestimmt.

Verträglichkeitsvermittler 1: Copolymer aus Ethylen, n-Butylacrylat, Glycidylacrylat

Verträglichkeitsvermittler 2: Copolymer aus Ethylen, Acrylsäure-t-butylester, Acrylsäure

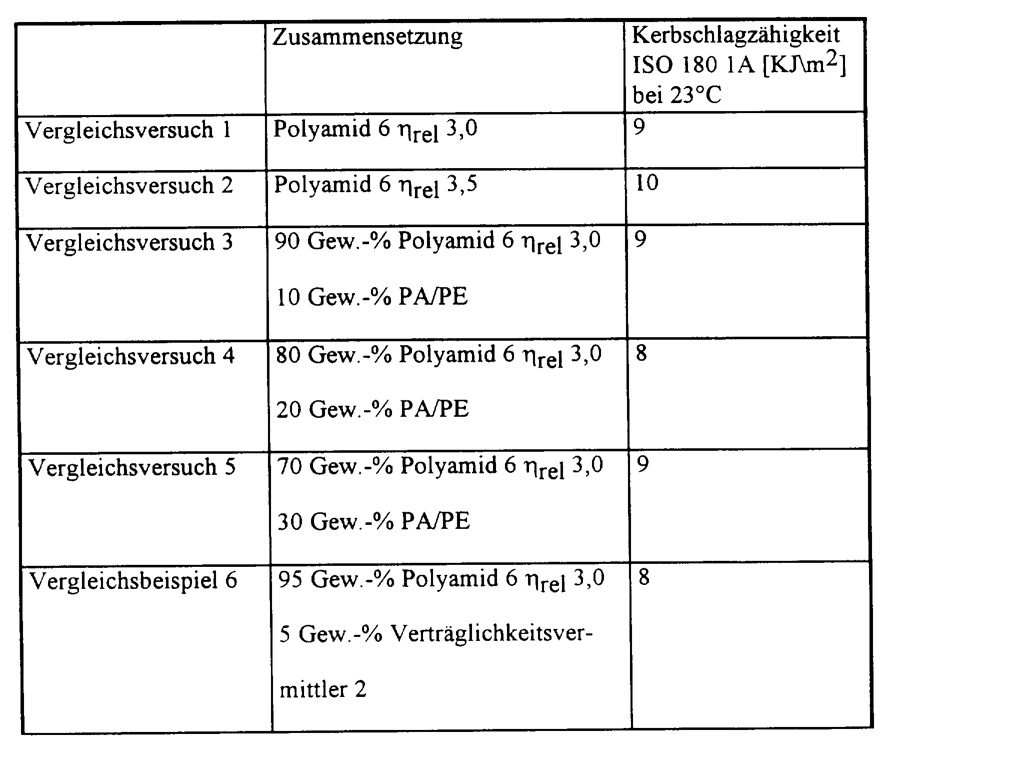

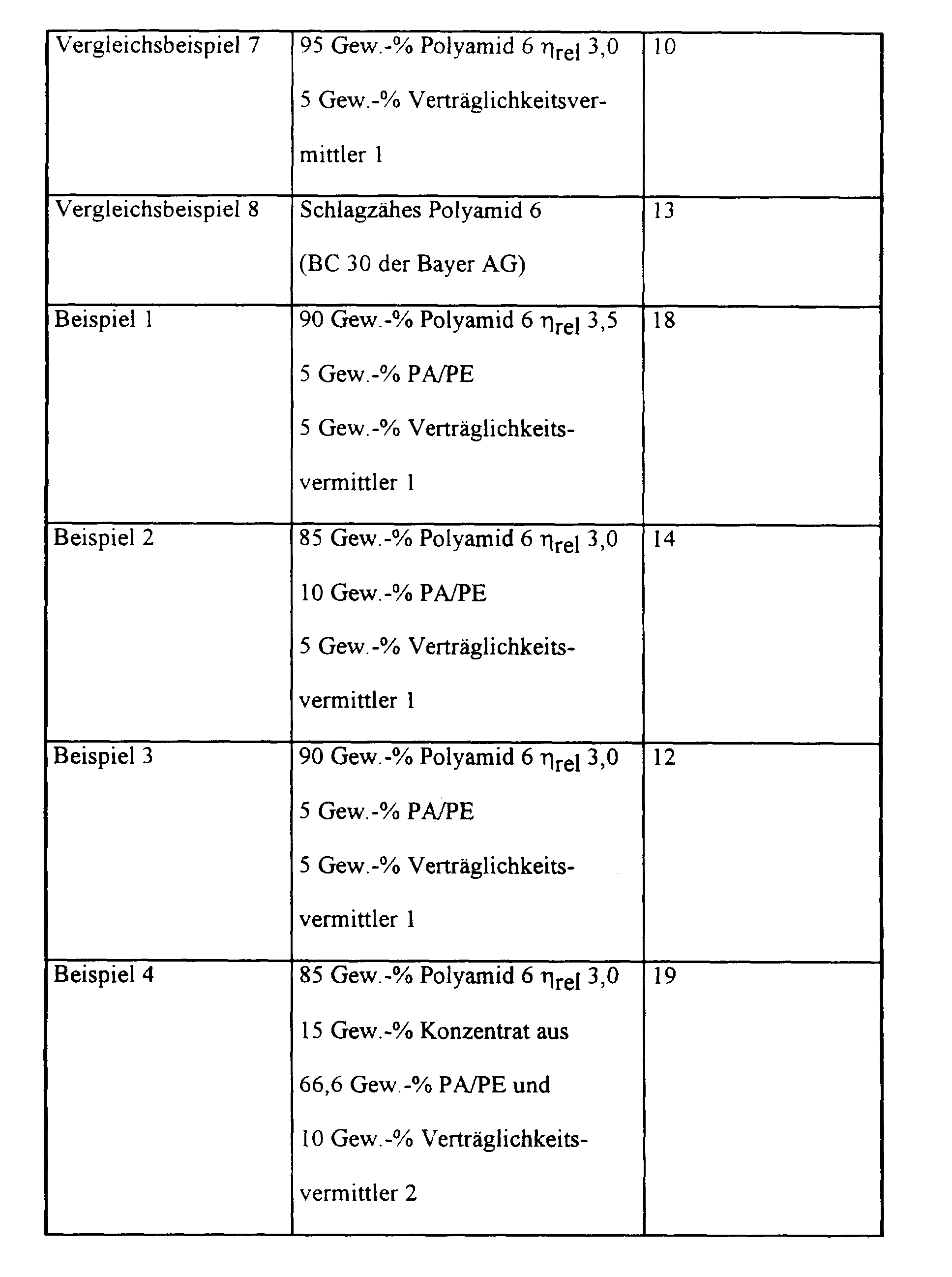

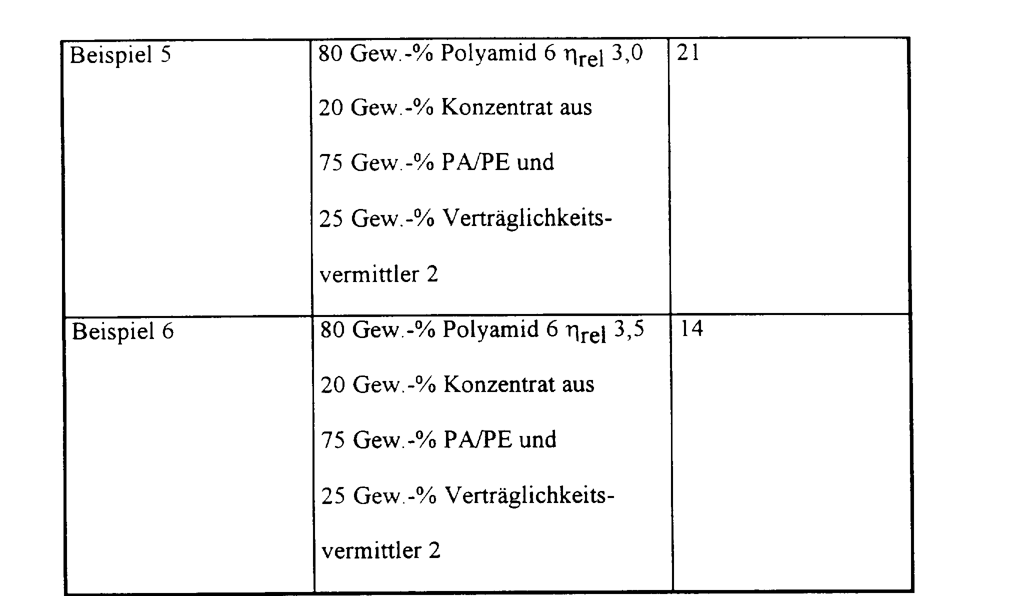

Die Compoundierungen wurden bei 240°C und einem Durchsatz von 30 kg/h auf einem ZSK 53-Doppelwellenextruder durchgeführt.

Alle folgenden Beispiele wurden mit einem Brabender Doppelschneckenextruder DSE 35/17 D compoundiert und anschließend zu Prüfstäben gemäß der einzelnen Prüfvorschriften verspritzt.

Der Zug-E-Modul wird bei Raumtemperatur gemessen nach DIN 53 457-t am Zugstab Nr. 3 (4 mm dick).

Die Schlagzähigkeit wird gemessen im Schlagversuch (IZOD; ausgeführt nach ISO 180/1C bei Raumtemperatur = 23°C) an Prüfstäben 80x10x4 mm.

### Vergleichsbeispiel 9

Man compoundiert eine Mischung aus 30 Gew.-% Kaolin, 63 Gew.-% PA/PE-Abfällen mit ca. 80 Gew.-% PE-Gehalt und 7 Gew.-% Verträglichkeitsvermittler bei 250°C mit einem Durchsatz von 5 kg/h.

Man erhält ein Material mit einem Zug-E-Modul von 400 N/mm und einer Schlagzähigkeit von "nicht gebrochen".

### Vergleichsbeispiel 10

Man compoundiert eine Mischung aus 69,6 Gew.-% Polyamid-6 mit einer relativen Lösungsviskosität (1 %ig in m-Kresol) von ηᵣₑₗ = 2,9, 30 Gew.-% Kaolin, 0,3 Gew.-% Nukleierungsmittel und 0,1 Gew.-% Verarbeitungshilfsmittel bei 270°C mit einem Durchsatz von 5 kg/h.

Man erhält ein Material mit einem Zug-E-Modul von >1 000 N/mm und einer Schlagzähigkeit von 48 kJ/m.

### Beispiel 7

Man compoundiert eine Mischung aus 30 Gew.-% Polyamid-6 mit einer relativen Lösungsviskosität (1 %ig in m-Kresol) von ηᵣₑₗ = 2,9, 30 Gew.-% Kaolin, 20 Gew.-% PA/PE-Abfälle mit ca. 80 Gew.-% PE-Gehalt, 10,6 Gew.-% Copolyamid mit Hauptbestandteil Polycaprolactam, 7 Gew.-% EPM-Kautschuk, 2 Gew.-% Verträglichkeitsvermittler (Copolymer aus Ethylen, n-Butylacrylat, Glycidylacrylat), 0,3 Gew.-% Nukleierungsmittel und 0,1 Gew.-% Verarbeitungshilfsmittel bei 250°C mit einem Durchsatz von 5 kg/h.

Man erhält ein Material mit einem Zug-E-Modul von >1000 N/mm und einer Schlagzähigkeit von "nicht gebrochen"

### Beispiel 8

Man compoundiert eine Mischung aus 20 Gew.-% Polyamid-6 mit einer relativen Lösungsviskosität (1 %ig in m-Kresol) von ηᵣₑₗ = 2,9, 40 Gew.-% Kaolin, 20 Gew.-% PA/PE-Abfälle mit ca. 80 Gew.-% PE-Gehalt, 10,6 Gew.-% Copolyamid mit Hauptbestandteil Polycaprolactam, 7 Gew.-% EPM-Kautschuk, 2 Gew.-% Verträglichkeitsvermittler (Copolymer aus Ethylen, n-Butylacrylat, Glycidylacrylat), 0,3 Gew.-% Nukleierungsmittel und 0,1 Gew.-% Verarbeitungshilfsmittel bei 250°C mit einem Durchsatz von 5 kg/h.

Man erhält ein Material mit einem Zug-E-Modul von >1 000 N/mm und einer Schlagzähigkeit von "nicht gebrochen".

### Beispiel 9:

Man compoundiert eine Mischung aus 17,6 Gew.-% Polyamid 6 mit einer relativen Lösungsviskosität (1%ig in m-Kresol) von ηᵣₑₗ=2,9, 30 Gew.-% Kreide, 30 Gew.-% PA/PE-Abfälle mit ca. 80 Gew.-% PE-Gehalt, 10 Gew.-% Copolyamid mit Hauptbestandteil Polycaprolactam, 5 Gew.-% EPM-Kautschuk, 7 Gew.-% Verträglichkeitsvermittler (Copolymer aus Ethylen, Maleinsäureanhydrid), 0,3 Gew.-% Nukleierungskonzentrat und 0,1 Gew.-% Verarbeitungshilfsmittel bei 250°C mit einem Durchsatz von 5 kg/h.

Man erhält ein Material mit einem Zug-E-Modul von > 1000 N/mm und einer Schlagzähigkeit von "nicht gebrochen".

### Beispiel 10:

Man compoundiert eine Mischung aus 27.6 Gew.-% Polyamid-6 mit einer relativen Lösungsviskosität (1%ig in m-Kresol) von ηᵣₑₗ=2,9, 30 Gew.-% Kreide, 30 Gew.-% PA/PE-Abfälle mit ca. 80 Gew.-% PE-Gehalt, 5 Gew.-% EPM-Kautschuk, 7 Gew.-% Verträglichkeitsvermittler (Copolymer aus Ethylen, Maleinsäureanhydrid), 0,3 Gew.-% Nukleierungskonzentrat und 0,1 Gew.-% Verarbeitungshilfsmittel bei 250°C mit einem Durchsatz von 5 kg/h.

Man erhält ein Material mit einem Zug-E-Modul von > 1000 N/mm und einer Schlagzähigkeit von "nicht gebrochen".

## Patentansprüche

1. Schlagzähe, gefüllte Formmassen aus
A) 10 bis 90 Gew.-% Polyamid mit einer relativen Viskosität (gemessen in einer 1-masseprozentigen Lösung in m-Kresol bei 25°C) ηᵣₑₗ = 2,0 bis ηᵣₑₗ = 5,0, bevorzugt ηᵣₑₗ = 2,5 bis ηᵣₑₗ = 3,5,
B) 1 bis 50 Gew.-% PA/PE-Verbundfolienabfällen verschiedenster Zusammensetzung,
C) 1 bis 15 Gew.-% Verträglichkeitsvermittler sowie
D) 0 bis 60 Gew.-% an anorganischen Füll- und/oder Verstärkungsstoffen,
E) 0 bis 30 Gew.-% Kautschuke, insbesondere gepfropfte Kautschuke bzw. kautschukartige Polymere, bevorzugt auf Polydien-, Polyacrylat- und Polyolefinbasis,
F) 0 bis 10 Gew.-% übliche Verarbeitungshilfsmittel oder andere Additive, wobei sich die Prozentangaben auf die Summe der Komponenten A) bis F) beziehen.

2. Verwendung der Formmassen nach Anspruch 1 zur Herstellung geformter Körper.

## Claims

1. Impact-resistant filled moulding compositions of
A) from 10 to 90 wt-% polyamide having a relative viscosity (measured as a 1 % solution by mass in m-cresol at 25°C) ηᵣₑₗ = 2.0 to ηᵣₑₗ = 5.0, preferably ηᵣₑₗ = 2.5 to ηᵣₑₗ = 3.5,
B) from 1 to 50 wt-% PA/PE composite sheet scrap of highly varied composition,
C) from 1 to 15 wt-% compatibility promoter and
D) from 0 to 60 wt-% of inorganic fillers and/or reinforcements,
E) from 0 to 30 wt-% rubbers, in particular grafted rubbers or rubber-like polymers, preferably based on polydiene, polyacrylate and polyolefine,
F) from 0 to 10 wt-% conventional auxiliary substances to aid processing or other additives, wherein the percentages are calculated on the sum of components A) to F).

2. Use of the moulding compositions according to Claim 1 for the preparation of moulded bodies.

## Revendications

1. Matières à mouler chargées résilientes consistant en :
A) 10 à 90 % en poids d'un polyamide ayant une viscosité relative (mesurée sur une solution à 1 % en poids dans le m-crésol à 25°C) ηᵣₑₗ = 2,0 à 5, de préférence 2,5 à 3,5,
B)1 à 50 % en poids de déchets de feuilles composites de PA/PE aux compositions les plus variables,
C) 1 à 15 % en poids d'agents compatibilisants et
D) 0 à 60% en poids de matières de charge et/ou renforçantes minérales,
E) 0 à 30 % en poids de caoutchoucs, plus spécialement de caoutchoucs greffés ou de polymères analogues à des caoutchoucs, de préférence à base de polydiènes, de polyacrylates et de polyoléfines,
F) 0 à 10 % en poids de produits auxiliaires de façonnage usuels ou d'autres additifs tous les pourcentages indiqués se rapportant à la somme des composants A) à F).

2. Utilisation des matières à mouler selon la revendication 1 pour la fabrication d'objets moulés.
